# EUROPEAN PATENT APPLICATION

(11) **EP 4 640 653 A1**
(43) Date of publication of application: **29.10.2025**
(21) Application number: 24172160.4
(22) Date of filing: 24.04.2024
(51) Int. Cl.: C04B 28/06, C04B 28/14, C04B 28/16, C04B 103/56, C04B 111/00, C04B 111/27, C04B 111/60, C04B 111/62, C04B 111/70, C04B 111/72, C04B 22/14, C04B 7/02, C04B 22/06, C04B 24/02, C04B 24/32, C04B 7/32

(54) **SHRINKAGE REDUCTION OF CONSTRUCTION COMPOSITIONS**

(71) Applicant: Sika Technology AG, 6340 Baar (CH)
(72) Inventor: KNOEBEL, Markus, Coesfeld 48653 (DE); SCHNEIDER, Nick, 48727 Billerbeck (DE)
(74) Representative: Sika Patent Attorneys

(57) **Abstract**

The present invention relates to the use of calcium oxide or calcium hydroxide to reduce the shrinkage in a construction composition comprising aluminate cement and/or calcium sulfoaluminate cement, and calcium sulfate, and optionally Portland cement.

## Description

### Technical Field

The present invention relates to the use of calcium oxide or calcium hydroxide to reduce the shrinkage of a construction composition comprising aluminate cement and/or calcium sulfoaluminate cement and calcium sulfate.

### Background of the invention

It has long been known that construction compositions based on mineral binders are subject to a change in dimensions, usually shrinkage, during the setting and drying process. Shrinkage is of great importance for the serviceability, durability and strength of the hardened building material, as it is often the cause of the formation of cracks or the bulging of screeds, for example.

It is a continuing task to ensure dimensional stability of construction materials and, in particular, to minimize shrinkage. Attempts have been made to counteract shrinkage not only through the way of construction and the selection of optimized mineral binder compositions, but recently also increasingly through the addition of additives.

In recent years, there has been a trend towards the use of binary and ternary mineral binders for construction materials in the flooring sector. Binary binders are mineral binders that comprise or essentially consist of aluminate cement or calcium sulfoaluminate cement and calcium sulfate. Ternary binders are mineral binders which comprise or essentially consist of aluminate cement or calcium sulfoaluminate cement, calcium sulfate and Portland cement. Binary and ternary mineral binders have the particular advantage of fast setting and therefore a shorter time to readiness for covering compared to binders based on Ordinary Portland Cement.

Binary and ternary mineral binders typically are also characterized by lower shrinkage as compared to binders based on Ordinary Portland Cement.

Additionally, the WO2022/038105 (Sika Technology AG) teaches the use of certain polyols to reduce the shrinkage of construction compositions based on binary or ternary mineral binders comprising aluminate cement and/or calcium sulfoaluminate cement, calcium sulfate, and optionally Portland cement.

However, for many applications, in particular for screeds, the shrinkage of construction compositions based on binary or ternary mineral binders is still too high. It is therefore desirable to find ways to further reduce the shrinkage of such construction compositions.

### Summary of the invention

It is an objective of the present invention to provide means for the reduction of shrinkage of construction composition comprising a mineral binder, said mineral binder comprising aluminate cement and/or calcium sulfoaluminate cement, calcium sulfate, and optionally Portland cement. It is another objective to provide advantageous construction compositions based on such binary or ternary mineral binders and having a reduced shrinkage.

It has surprisingly been found that the shrinkage of a construction composition based on mineral binder comprising aluminate cement and/or calcium sulfoaluminate cement, calcium sulfate, and optionally Portland cement, can be further reduced by the addition of calcium oxide or calcium hydroxide.

Therefore, the objective of the present invention is solved by the subject matter of claim 1.

The use of calcium oxide or calcium hydroxide in a construction composition comprising a binary or ternary binder significantly reduces the shrinkage of the construction composition as compared to the same construction composition without the calcium oxide or calcium hydroxide. A lower shrinkage results in less formation of cracks.

The use of calcium oxide or calcium hydroxide according to the present invention has the further advantageous effects:
▪ high stability during storage and transport,
▪ mixing behavior is not significantly influenced,
▪ workability is not significantly influenced,
▪ additional acceleration or retardation is possible,
▪ no additional air is introduced,
▪ no additional volatile organic compounds (VOC) are introduced,
▪ increased brightness can be achieved,
▪ drying speed is not significantly influenced,
▪ good adhesion to dispersion based adhesives,
▪ increased mechanical strength is possible.

Further aspects of the present invention are the subject matter of independent claims. Preferred embodiments are the subject matter of dependent claims. #

### Detailed Ways

In a first aspect the present invention relates to the use of calcium oxide or calcium hydroxide for the reduction of shrinkage of a construction composition comprising a mineral binder, said mineral binder comprising or consisting of
a) aluminate cement and/or calcium sulfoaluminate cement,
b) calcium sulfate, and
c) optionally Portland cement.

Within the present context, the expression "shrinkage" relates to a reduction of the volume of a construction composition in at least one dimension. In particular, shrinkage occurs during setting and drying of a construction composition due to evaporation of water ("plastic shrinkage"), chemical reaction of water with a mineral binder ("autogenous shrinkage"), and/or loss of capillary water ("drying shrinkage"). Shrinkage of a construction composition can for example be measured according to standard EN 13872:2004-04. A reduction of shrinkage within the present context means that the shrinkage, especially during setting and drying, of a construction composition comprising a mineral binder and calcium oxide or calcium hydroxide is lower as compared to the same construction composition without calcium oxide or calcium hydroxide.

The terms "drying", "curing", and "hardening" can be used interchangeably within the present context.

Calcium oxide and calcium hydroxide used within the present context is not particularly limited. Calcium oxide is also known as quicklime, calcium hydroxide is also known as slaked lime in construction industry.

It is for example possible to use white lime, dolomitic lime, hydrated lime, natural hydraulic lime, hydraulic lime, air lime, or formulated lime according to standard EN 459-1:2015. It is preferred that such limes are used as slaked limes, i.e. essentially consisting of calcium hydroxide.

Calcium hydroxide is preferred over calcium oxide.

It is preferred that calcium hydroxide used is a pure calcium hydroxide with a purity of at least 95 w%, preferably at least 97 w%. Calcium hydroxide may contain small amounts of oxides or hydroxides of magnesium, aluminium, iron, titanium, and/or silicon.

According to embodiments, calcium oxide or calcium hydroxide has a particle size D50 of 1 - 10 µm as measured by laser light scattering, preferably in accordance with the standard ISO 13320:2009. In particular, a Mastersizer 2000 instrument with a Hydro 2000G dispersing unit and the Mastersizer 2000 software from Malvern Instruments GmbH (Germany) can be used for this purpose. The D50 value is the value in a particle size distribution where 50% of the particles have a lower size. The D50 value thus corresponds to an average particle size.

The BET surface of calcium oxide or calcium hydroxide preferably is higher than 5 m²/g, more preferably is between 5-25 m²/g, in particular between 10 - 20 m²/g. BET surface can be measured as described in standard ISO 9277:2010.

According to embodiments, calcium oxide or calcium hydroxide is used in an amount of at least 0.001 w%, preferably between 0.001 - 0.5 w%, more preferably between 0.1 - 0.25 w%, relative to the total dry weight of the construction composition.

A mineral binder of the present invention is a binder that hydrates in the presence of water thereby forming solid hydrates.

Aluminate cement is a cement having a main phase consisting of hydraulic calcium aluminates. Especially, the main phase is CA (CaO · Al₂O₃). Depending on the type of aluminate cement other calcium aluminates may also be present or even be comprised as the main phase. Such other calcium aluminates in particular are CA2, C3A, and C12A7. Minor phases may additionally be present in aluminate cement of the present invention. Such minor phases can be, for example, belite, ternesite, and ferrites. It is particularly preferred that an aluminate cement of the present invention is according to standard EN 14647:2006-01. Calcium aluminate cement is a particular typical form of aluminate cement and is particularly preferred within the present context.

A calcium sulfoaluminate cement of the present invention is a cement with a main phase consisting of C4(A3-xFx)3$ (4 CaO · 3-x Al₂O₃ · x Fe₂O₃ · CaSO₄), where x is from 0 - 3. A common main phase is ye'elemite (C4A3$). Calcium sulfoaluminate cements normally also contain minor phases such as, for example, calcium aluminates, belite, ferrites, or ternesite.

Aluminate cement is preferred over calcium sulfoaluminate cement or mixtures of aluminate cement and calcium sulfoaluminate cement.

Calcium sulfate, within the present context, can be anhydrite, calcium sulfate hemihydrate (in the alpha- or the beta-form), calcium sulfate dihydrate, or mixtures thereof. In preferred embodiments, alpha-calcium sulfate hemihydrate is used. In particular the calcium sulfate is a mixture of anhydrite and hemihydrate, preferably of anhydrite and alpha-calcium sulfate hemihydrate. The use of calcium sulfate dihydrate is less preferred. A too high amount of calcium sulfate dihydrate can lead to poor workability.

Calcium sulfate of the present invention can be based on FGD gypsum, phosphogypsum or natural gypsum. Portland cement within the present context is a cement of type CEM I, CEM II, CEM III, CEM IV or CEM V according to standard EN 197-1:2018-11. A Portland cement can also be a mixture of these cement types. Portland cements described in other standards, e.g. ASTM standards or Chinese standards, are equally suitable. The clinker content in a Portland cement of the present invention is preferably at least 65% by weight, based on the total dry weight of the cement. In certain embodiments of the present invention, the clinker content is at least 80% by weight, based on the total dry weight of the cement.

According to certain embodiments, the mineral binder comprises other binders in addition to aluminate cement and/or calcium sulfoaluminate cement, calcium sulfate, and optionally Portland cement. In particular, these are latent hydraulic binders and/or pozzolanic binders. Suitable latent hydraulic and/or pozzolanic binders include, for example, natural pozzolans, ironmaking or steelmaking slags, fly ash, silica fume and/or burnt shale. According to certain embodiments, the mineral binder comprises 6 - 35% by weight of latent hydraulic and/or pozzolanic binders. Other SCM, such as for example limestone, may additionally be contained.

According to preferred embodiments, the mineral binder comprises or essentially consists of
a) aluminate cement and/or calcium sulfoaluminate cement
b) calcium sulfate, and
c) optionally Portland cement.

According to embodiments, the mineral binder consists of
a) aluminate cement,
b) calcium sulfate, and
c) optionally Portland cement.

According to embodiments, a weight ratio of the combined dry weight of aluminate cement and calcium sulfoaluminate cement to the dry weight of calcium sulfate is between 1:1 to 1:8, preferably 1:1.6 to 1:5, especially 1:3 to 1:4.5.

The expression "combined dry weight" refers to the sum of dry weight of the respective components, whereby the weight of one component can also be zero.

In a mineral binder comprising or essentially consisting of aluminate cement and/or calcium sulfoaluminate cement, calcium sulfate, and Portland cement, the weight ratio of aluminate cement and/or calcium sulfoaluminate cement to Portland cement is preferably 10:1 - 1:10, more preferably 4:1 - 1:5, most preferably 3:1 - 1:3, in particular 3:1 -1:1.

According to embodiments, Portland cement is present and the weight ratio of the combined dry weight of aluminate cement and calcium sulfoaluminate cement to the dry weight of Portland cement is at least 1.

Advantageously, the proportion of calcium sulfate in the mineral binder according to the present invention is in the range of 1 - 80 % by weight, preferably 10 - 75 % by weight, in each case based on the total dry mass of the mineral binder.

According to embodiments, the mineral binder comprises or consists of
a) aluminate cement and/or calcium sulfoaluminate cement, and
b) 1 - 80 w% by weight, preferably 10 - 75 w%, based on the total dry mass of the mineral binder, of calcium sulfate,
wherein a weight ratio of the combined dry weight of aluminate cement and calcium sulfoaluminate cement to the dry weight of calcium sulfate is between 1:1 to 1:8, preferably 1:1.6 to 1:5, especially 1:3 to 1:4.5.

According to embodiments, the mineral binder comprises or consists of
a) aluminate cement and/or calcium sulfoaluminate cement
b) 1 - 80 w% by weight, preferably 10 - 75 w%, based on the total dry mass of the mineral binder, of calcium sulfate, and
c) Portland cement,

wherein a weight ratio of the combined dry weight of aluminate cement and calcium sulfoaluminate cement to the dry weight of calcium sulfate is between 1:1 to 1:8, preferably 1:1.6 to 1:5, especially 1:3 to 1:4.5,
and wherein the weight ratio of the combined dry weight of aluminate cement and calcium sulfoaluminate cement to the dry weight of Portland cement is at least 1, preferably is between 10:1 - 1:1, more preferably 4:1 - 1:1, most preferably 3:1 -1:1.

It can be preferred that a construction composition of the present invention comprises the mineral binder in an amount of between 5 - 80 w%, preferably between 40 - 75 w%, more preferably between 50 - 75 w%, relative to the total dry weight of the construction composition.

According to embodiments, additionally an organic shrinkage reducing agent is used, the organic shrinkage reducing agent preferably being selected from polyethers or polyols, especially from glycol, polyalkylene glycols, glycerine, or erythritol.

In another aspect, the present invention relates to a construction composition comprising, in each case relative to the total dry weight of the construction composition,
a) 5 - 80 w%, preferably between 40 - 75 w%, more preferably 50 - 75 w%, of a mineral binder comprising
   a1) aluminate cement and/or calcium sulfoaluminate cement,
   a2) calcium sulfate, and
   a3) optionally Portland cement, and
b) at least 0.001 w%, preferably between 0.001 - 0.5 w%, more preferably between 0.1 - 0.25 w%, of calcium oxide or calcium hydroxide.

All features and embodiments described above also apply to this aspect.

In particular, in a construction composition of the present invention a weight ratio of the combined dry weight of aluminate cement and calcium sulfoaluminate cement to the dry weight of calcium sulfate is between 1:1 to 1:8, preferably 1:1.6 to 1:5, especially 1:3 to 1:4.5.

In particular, in a construction composition of the present invention, where Portland cement is present, the weight ratio of the combined dry weight of aluminate cement and calcium sulfoaluminate cement to the dry weight of Portland cement is at least 1.

In particular, in a construction composition of the present invention additionally an organic shrinkage reducing agent selected from polyethers or polyols, especially from glycol, polyalkylene glycols, glycerine, or erythritol, is present in an amount of between 0.5 - 10 w%, preferably 1.2 - 6.5 w% relative to the combined dry weight of the aluminate cement and calcium sulfoaluminate cement.

A construction composition of the present invention may further comprise aggregates. Aggregates may be any material that is not reactive in the hydration reaction of mineral binders. Typical aggregates are e.g. rock, crushed stone, gravel, slag, sand, in particular quartz sand or river sand, ground rock, recycled concrete, glass, expanded glass, hollow glass beads, glass ceramics, volcanic rock, pumice, perlite, vermiculite, quarry waste, porcelain, electro-fused or sintered abrasives, kiln furniture, silica xerogels and/or fine aggregates such as ground limestone, ground dolomite and/or ground alumina. A particularly preferred aggregate is sand.

According to embodiments, a construction composition of the present invention may further comprise fillers, which are in particular selected from carbonate fillers, preferably in the form of calcium carbonate, such as limestone powder, or dolomite.

A construction composition of the present invention may comprise between 10-80 w%, preferably 25 - 75 w%, more preferably 30 - 70 w%, in each case based on the dry weight of the construction composition, of aggregates and/or fillers.

In addition to the ingredients already mentioned, the construction composition may also contain other conventional ingredients, in particular superplasticizers, thickeners, dyes and/or pigments, defoamers, air-entraining agents, stabilizers, retarders, accelerators, activators, fibers, chromium (VI) reducers and/or flexibilizers. By adding such known additives, for example, the flow properties and rheological behavior can be improved and adapted to the respective requirements, foaming can be suppressed and/or hardening can be delayed.

According to embodiments, a construction composition comprises, in each case relative to the total dry weight of the construction composition,
a) 5 - 80 w%, preferably 60 - 70 w%, of a mineral binder comprising
   a1) aluminate cement and/or calcium sulfoaluminate cement,
   a2) calcium sulfate, and
   a3) optionally Portland cement,
b) at least 0.001 w%, preferably between 0.001 - 0.5 w%, more preferably between 0.1 - 0.25 w%, of calcium hydroxide, and
c) 10 - 80 w%, preferably 25 - 35 w% of aggregates and/or fillers.

According to embodiments, a construction composition comprises, in each case relative to the total dry weight of the construction composition,
a) 45 - 70 w%, preferably 50 - 60 w%, of a mineral binder comprising
   a1) aluminate cement and/or calcium sulfoaluminate cement,
   a2) calcium sulfate, and
   a3) optionally Portland cement,
b) at least 0.001 w%, preferably between 0.001 - 0.5 w%, more preferably between 0.1 - 0.25 w%, of calcium hydroxide, and
c) 25 - 50 w%, preferably 35 - 45 w% of aggregates and/or fillers.

According to embodiments, a construction composition comprises, in each case relative to the total dry weight of the construction composition,
a) 5 - 45 w%, preferably 25 - 40 w%, of a mineral binder comprising
   a1) aluminate cement and/or calcium sulfoaluminate cement,
   a2) calcium sulfate, and
   a3) optionally Portland cement,
b) at least 0.001 w%, preferably between 0.001 - 0.5 w%, more preferably between 0.1 - 0.25 w%, of calcium hydroxide, and
c) 50 - 80 w%, preferably 55 - 65 w% of aggregates and/or fillers.

It is a particular advantage of the present invention that no additional volatile organic compounds (VOC) are being introduced to reduce the shrinkage. Volatile organic compounds can be measured, for example, according to the GEV-Emicode method of 4.4.2019. Preferably, a construction composition of the present invention fulfills the requirements of EC1+ according to GEV-Emicode.

According to embodiments, in a construction composition of the present invention, the total amount of total volatile organic compounds as measured according to the GEV-Emicode method is not higher than 0.25 µg Toluene equivalents per g of the construction composition.

A construction composition of the present invention can in particular be a dry mortar. A dry mortar contains less than 1% by weight, preferably less than 0.1% by weight, of water, based on the total weight of the dry mortar.

The construction composition can be in the form of a one-component composition. A one-component composition is a composition where all ingredients are packaged within the same container. This has the advantage that errors due to incorrect dosing of components and/or inadequate mixing, for example on the construction site, are avoided. However, the construction chemical composition can also be in the form of a multi-component composition, e.g. in the form of a two- or three-component composition. A two-component composition is a composition where the ingredients are packaged in two spatially separated containers. This can have the advantage that certain properties can be adjusted to the requirements at the place of application.

A construction composition according to the invention may furthermore contain water or be mixed with water.

In another aspect the present invention relates to a hardened body obtained by curing a construction composition as described above by the addition of water.

According to embodiments, a construction composition according to the invention is mixed with water in a water/powder weight ratio of between 0.1 - 1.0, preferably 0.14 - 0.6, in particular 0.16 - 0.4. The term powder refers to the entire dry construction composition as described above. Thereby, a wet construction composition or paste is obtained. Hardening starts after the addition of water.

The hardened body may in particular be a cured cementitious tile adhesive, a cured spackling compound, a cured grout, a cured self-leveling underlayment, a cured self-leveling layer, a cured render, a cured joint filler, a cured masonry mortar or concrete, a cured screed, a cured wall filler, a cured levelling compound, a cured thin-bed mortar, a cured waterproofing mortar, a cured sealing slurry, a cured anchoring mortar or a cured decoupling membrane, wherein the cementitious tile adhesive, the spackling compound, the grouting material, the self-leveling underlayment, the self-levelling material, the render, the joint filler, the repair mortar, the masonry mortar or concrete, the screed, the wall filler, the levelling compound, the thin-bed mortar, the waterproofing mortar, the sealing slurry, the anchoring mortar or the decoupling membrane contains or consists of a building chemical composition according to the invention.

In another aspect the present invention relates to the use of a construction composition as described above as cementitious tile adhesive, spackling compound, grout, self-levelling underlayment, self-levelling layer, render, repair mortar, joint filler, masonry mortar or concrete, screed, wall filler, levelling compound, thin-bed mortar, waterproofing mortar, sealing slurry, anchoring mortar, or decoupling sheet.

Very particularly, the construction composition of the present invention is used as a levelling compound.

A cementitious tile adhesive is especially according to standard EN 12004-1. A grout is especially according to standard EN 13888. A self-levelling underlayment or a self-levelling layer is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A thin-bed mortar is especially according to standard EN 998-2. A waterproofing mortar is especially according to standard EN 1504-2. An anchoring mortar is especially according to standard EN 1504-6.

In another aspect, the present invention relates to a method of assembling a building comprising the steps of
a) mixing a construction composition as described above with water,
b) applying the mixture obtained in step a) to a substrate,
c) letting the mixture applied in step b) dry to obtain a dry surface,
d) optionally bonding a construction element to the dry surface obtained in step c)
with a dispersion-based adhesive which is directly applied to the dry surface obtained in step c).

According to embodiments, a construction composition according to the invention is mixed with water in a water/powder weight ratio of between 0.1 - 1.0, preferably 0.14 - 0.6, in particular 0.16 - 0.4. Ways of mixing the construction composition with water are not particularly limited and are known to the skilled person. The term powder refers to the entire dry construction composition as described above. Thereby, a wet construction composition or paste is obtained. Hardening starts after the addition of water.

Ways of applying the mixture of construction composition and water are not particularly limited and are known to the skilled person. For example, application can be done via spraying, troweling, brushing, spreading, or pouring. The substrate can be any material normally used in construction. Especially, the substrate is concrete. It is, however, also possible that the substrate is gypsum, wood, metal, or another substrate typically used in construction. The substrate may also be a mix of materials. It is preferred that the substrate is not glass or plastic. Application can be done in various thickness, depending on the type of use. Useful thicknesses can be between 1 mm and 100 mm, preferably 2 mm and 50 mm, more preferably 5 mm and 20 mm.

The applied mixture of construction material and water dries due to evaporation of water as well as due to the hardening reaction during which water is consumed. Drying also depends on the environmental conditions, especially on temperature. The expression "dried", or "dry surface" does not mean that the construction composition is fully hardened. Rather, a dry surface is a surface feeling dry to the touch and/or having a residual moisture of not more than 5 CM-%, preferably not more than 4 CM-%. The residual moisture can be measured using a CM device (manufacturer: Riedel-de-Haen) according to the calcium carbide method in accordance with DIN 18560-4:2012-6. Typically, when applying the mixture in a thickness of 10 mm, a dry surface is obtained within not more than 1 day at 25°C and 75% rel. humidity.

A construction element that is bonded to the dried surface can be, for example, ceramic tiles, soft floor coverings such as PVC or other thermoplastics, luxury vinyl tiles (LVT), linoleum, rubber or textile coverings. A dispersion adhesive preferably is a water-based dispersion of an organic resin prepared from one or more monomers of (meth)acrylate, (meth)acrylate esters, vinyl acetate, ethylene, butadiene, and styrene. Organic resins preferably have a Tg of between -50 to -30 °C. Dispersion adhesives typically also contain fillers and additives such as biocides and/or rheology aids. It is a particular advantage of a construction composition of the present invention that it can easily be bonded with dispersion adhesives without the need for a primer.

### Examples

The following table 1 gives an overview of raw materials used.

**Table 1**

| | |
|---|---|
| CaSO₄ | Calcium sulfate α-hemi-hydrate |
| CSA | Calcium sulfoaluminate cement (i-tech Ali CEM from Heidelberg Materials) |
| Sand | Quartz sand (0.1 - 0.3 mm) |
| CaCOs | Fine chalk filler (particle size D50 = 2.2 µm) |
| RDP | Redispersible powder based on hard copolymer of vinyl acetate and ethylene |
| Glycerine | 1,2,3-propantriol (>99.5% purity, Sigma Aldrich) |
| Ca(OH)₂ | >95.0% purity, particle size D50 5.2 µm (laser light scattering) |
| Additives | Cellulose based thickener, superplasticizer, accelerator, retarder |

Dry mortars were prepared by mixing all components other than water in the amounts as indicated in below table 2. Therefore, components were vigorously mixed until a homogeneous powder resulted. Water in the amount as indicated in below table 2 was added to the dry mix and mixing was continued for 60 s at 600 rpm on an IKA-mixing unit to prepare the wet mortars.

Start and end of setting was measured according to the Vicat method described in standard DIN EN 196-3:2017-03.

Compressive strength (CS) and flexural strength (FS) were measured according to standard DIN EN 196-1:2016-11 after 1d.

Unrestraint was measured as follows.

Method 1: Gypsum plaster board (1250 mm x 2000 mm) is fully covered with PE-foil of 0.05 mm thickness. Wet mortar is evenly applied thereto to cover the surface in a thickness of 5 mm, whereby a strip of 5 mm of the surface is left uncovered on each side. Weights are applied to the uncovered corners to prevent movement of the PE foil and gypsum plaster board. Wet mortar is left to cure at 25°C / 50% r.h. Shrinkage of material in this test leads to bending of the edges of cured mortar. The extend of bending was measured after the time indicated in below table 2 on the short sides. Average values are given in table 2. Values measured in this test directly correlate with shrinkage, meaning that high values measured indicate high shrinkage.

Method 2: Ceramic tile (30 x 60 cm) is fully covered with PE-foil of 0.05 mm thickness. Wet mortar is evenly applied thereto to cover the surface in a thickness of 10 mm, whereby a strip of 2 mm of the surface is left uncovered on each side. When the end of the setting time is reached, the set mortar surface is equipped with sensors of type FTI 10.2.50.0.K1 (Novotechnik) at one edge and an Almemo 5590-2 data logger is positioned above the sensor. A weight is applied to the set mortar opposite to the sensor and data logger. Displacement of the sensor is continuously measured over 144 hours. Values measured in this test directly correlate with shrinkage, meaning that high values measured indicate high shrinkage.

The following table 2 shows an overview of mortar composition and results of measurements.

**Table 2: Example C-1 (not inventive), Examples E-1 and E-3 (inventive)**

| | C-1 | E-1 | E-2 | E-3 |
|---|---|---|---|---|
| CaSO₄ [g] | 46 | 46 | 46 | 46 |
| CSA [g] | 18 | 18 | 18 | 18 |
| Sand [g] | 26 | 26 | 26 | 26 |
| CaCO₃ [g] | 7.5 | 7.5 | 7.5 | 7.5 |
| RDP [g] | 1.5 | 1.5 | 1.5 | 1.5 |
| Ca(OH)₂ [g] | 0 | 0.125 | 0.25 | 0.5 |
| Glycerine [g] | 0.25 | 0.25 | 0.25 | 0.25 |
| Additives [g] | 0.75 | 0.75 | 0.75 | 0.75 |
| w/p ratio* | 0.22 | 0.22 | 0.22 | 0.22 |
| Set time start [min] | 64 | 50 | 60 | 164 |
| Set time end [min] | 70 | 56 | 66 | 172 |
| CS, 1d [MPa] | 38 | 43 | 43 | 34 |
| FS, 1d [MPa] | 8.6 | 8.5 | 7.5 | 6.5 |

| Shrinkage Method 1 | | | | |
|---|---|---|---|---|
| 6h [mm] | 0 | 0 | 0 | n.m. |
| 22h [mm] | 6.6 | 5.6 | 2.4 | n.m. |
| 30h [mm] | 9.8 | 7.0 | 3.0 | n.m. |
| 48h [mm] | 10.9 | 8.0 | 3.9 | n.m. |

| Shrinkage Method 2 | | | | |
|---|---|---|---|---|
| 24 h [mm] | 1.75 | 0.75 | 0.33 | n.m. |
| 48 h [mm] | 1.63 | 0.76 | 0.38 | n.m. |
| 72 h [mm] | 1.51 | 0.75 | 0.40 | n.m. |
| 96 h [mm] | 1.35 | 0.6 | 0.30 | n.m. |
| 120 h [mm] | 1.15 | 0.55 | 0.28 | n.m. |
| 144 h [mm] | 1.05 | 0.50 | 0.25 | n.m. |

| | | | | |
|---|---|---|---|---|
| * weight ratio of water to powder n.m.: not measured | | | | |

It can be seen from the above results that the addition of calcium hydroxide significantly reduces the shrinkage of a construction composition. At the same time compressive strength can be increased while flexural strength can be maintained on an acceptable level. Small amounts of calcium hydroxide added lead to some acceleration whereas higher amount lead to significant retardation.

## Claims

1. Use of calcium oxide or calcium hydroxide for the reduction of shrinkage of a construction composition comprising a mineral binder, said mineral binder comprising or consisting of
a) aluminate cement and/or calcium sulfoaluminate cement,
b) calcium sulfate, and
c) optionally Portland cement.

2. The use according to claim 1, wherein calcium oxide or calcium hydroxide is used in an amount of at least 0.001 w%, preferably between 0.001 - 0.5 w%, more preferably between 0.1 - 0.25 w%, relative to the total dry weight of the construction composition.

3. The use according to any of the previous claims, wherein the construction composition comprises the mineral binder in an amount of between 5 - 80 w%, preferably between 40 - 75 w%, more preferably between 50 - 75 w%, relative to the total dry weight of the construction composition.

4. The use according to any of the previous claims, wherein a weight ratio of the combined dry weight of aluminate cement and calcium sulfoaluminate cement to the dry weight of calcium sulfate is between 1:1 to 1:8, preferably 1:1.6 to 1:5, especially 1:3 to 1:4.5.

5. The use according to any of the previous claims, wherein, where Portland cement is present, the weight ratio of the combined dry weight of aluminate cement and calcium sulfoaluminate cement to the dry weight of Portland cement is at least 1.

6. The use according to any of the previous claims, wherein additionally an organic shrinkage reducing agent is used, the organic shrinkage reducing agent preferably being selected from polyethers or polyols, especially from glycol, polyalkylene glycols, glycerine, or erythritol.

7. A construction composition comprising, in each case relative to the total dry weight of the construction composition,
a) 5 - 80 w%, preferably between 40 - 75 w%, more preferably 50 - 75 w%, of a mineral binder comprising
a1) aluminate cement and/or calcium sulfoaluminate cement,
a2) calcium sulfate, and
a3) optionally Portland cement, and
b) at least 0.001 w%, preferably between 0.001 - 0.5 w%, more preferably between 0.1 - 0.25 w%, of calcium oxide or calcium hydroxide.

8. The construction composition according to claim 7, wherein a weight ratio of the combined dry weight of aluminate cement and calcium sulfoaluminate cement to the dry weight of calcium sulfate is between 1:1 to 1:8, preferably 1:1.6 to 1:5, especially 1:3 to 1:4.5.

9. The construction composition according to any of claims 7 or 8, wherein where Portland cement is present, the weight ratio of the combined dry weight of aluminate cement and calcium sulfoaluminate cement to the dry weight of Portland cement is at least 1.

10. The construction composition according to any of claims 7-9, wherein additionally an organic shrinkage reducing agent selected from polyethers or polyols, especially from glycol, polyalkylene glycols, glycerine, or erythritol, is present in an amount of between 0.5 - 10 w%, preferably 1.2 - 6.5 w% relative to the combined dry weight of the aluminate cement and calcium sulfoaluminate cement.

11. The construction composition according to any of claims 7 - 10, wherein the total amount of total volatile organic compounds as measured according to the GEV-Emicode method is not higher than 0.25 µg Toluene equivalents per g of the construction composition.

12. A hardened body obtained by curing a construction composition as claimed in any of claims 7-11 by the addition of water.

13. Use of a construction composition as claimed in any of claims 7-11 as a cementitious tile adhesive, spackling compound, grout, self-levelling underlayment, self-levelling layer, render, repair mortar, joint filler, masonry mortar or concrete, screed, wall filler, levelling compound, thin-bed mortar, waterproofing mortar, sealing slurry, anchoring mortar, or decoupling sheet.

14. A method of assembling a construction comprising the steps of
a) mixing a construction composition according to any of claims 7-11 with water,
b) applying the mixture obtained in step a) to a substrate,
c) letting the applied mixture dry,
d) optionally bonding a construction element to the dry surface obtained in step c) with a dispersion-based adhesive which is directly applied to the dry surface obtained in step c).
